# EUROPEAN PATENT SPECIFICATION

(11) **EP 0 955 629 B1**
(45) Date of publication and mention of the grant of the patent: **15.09.2004**
(21) Application number: 98830269.1
(22) Date of filing: 05.05.1998
(51) Int. Cl.: G11B 5/00, G11B 5/55, H02N 1/00

(54) **Method for manufacturing a hard disk read/write unit, with micrometric actuation**
Herstellungsverfahren für eine Festplatten-Lese/Schreibeinheit, mit mikrometrischer Betätigung
Méthode de fabrication d'une unité de lecture/écriture pour disque dur, avec commande micro-métrique

(43) Date of publication of application: 10.11.1999
(73) Proprietor: STMicroelectronics S.r.l., 20041 Agrate Brianza (Milano) (IT)
(72) Inventor: Mastromatteo, Ubaldo, 20010 Cornaredo (IT); Murari, Bruno, 20052 Monza (IT); Vigna, Benedetto, 85100 Potenza (IT); Zerbini, Sarah, 43012 Fontanellato (IT)
(74) Representative: Cerbaro, Elena, Dr.

(56) References cited:
- WO-A-93/21536
- WO-A-95/34943
- US-A- 5 428 259
- FAN L -S ET AL: "MAGNETIC RECORDING HEAD POSITIONING AT VERY HIGH TRACK DENSITIES USING A MICROACTUATOR-BASED, TWO-STAGE SERVO SYSTEM" IEEE TRANSACTIONS ON INDUSTRIAL ELECTRONICS, vol. 42, no. 3, June 1995, pages 222-233, XP000506382

## Description

The present invention relates to a method for manufacturing a hard disk read/write unit, with micrometric actuation.

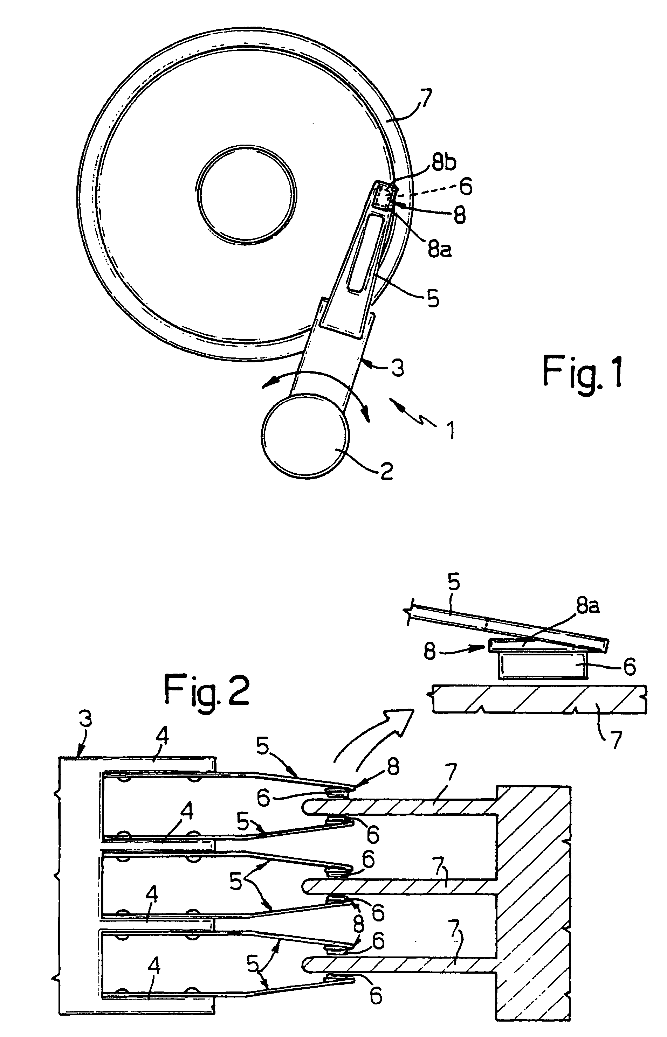

As is known, hard disks are the most commonly used data storage solution; consequently they are produced in very large volumes, and the maximum density of data storage is increasing year by year. Hard disks are read and written on by actuator devices, the general structure whereof is shown in figures 1 and 2, and is described hereinafter.

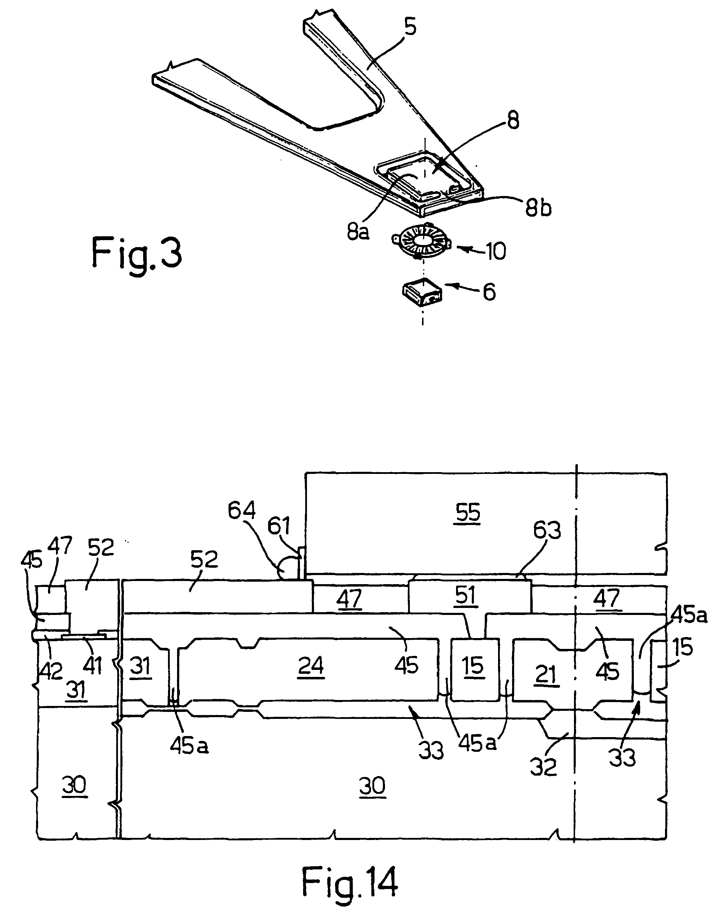

In particular, figure 1 shows an actuator device 1 of known rotary type, which comprises a motor 2 (also known as a voice coil motor) secured to a support body 3 which is generally known as E-block, owing to its "E" shape in lateral view (see figure 2). The support body 3 has a plurality of arms 4 which each support a suspension 5 formed by a cantilevered plate. At its end not connected to the support body 3, each suspension 5 supports a R/W transducer 6 for reading/writing, which in an operative condition is disposed facing a surface of a hard disk 7, and such that it can perform roll and pitch movements in order to follow the surface of the hard disk 7. To this end, R/W transducer 6 (which is also known as picoslider or slider) is bonded to a coupling known as a gimbal 8, which is generally formed from the suspension 5 itself and comprises for example a rectangular plate 8a, cut on three and a half sides from the plate of the suspension 5, and having a portion 8b connected to the suspension 5 and allowing bending of plate 8a caused by the weight of the R/W transducer 6 (see figure 3).

At present, the maximum track density of hard disks is approximately 5000 tracks per inch (TPI), but it is expected that in the near future, a density of at least 25,000 TPI will be achieved, which is equivalent to a distance between tracks of approximately 1 µm, and tracking accuracy which is better than 0.1 µm.

These density levels cannot be obtained simply by improving the present technology, owing to the existing mechanical problems (resonance of the positioning arms, and low frequency effects). It has thus been proposed to use a double actuation stage, with a rougher first actuation stage, including the motor 2 moving the assembly formed by the support body 3, the suspension 5 and the R/W transducer 6 across the hard disk 7 during the tracking, and a second actuation stage performing a finer control of the position of the R/W transducer 6. Two solutions have been proposed hitherto, i.e. millimetric actuation, in which the suspension 5 or the support body 3 are adjusted such as to control in a millimetric manner the position of the suspension 5; and micrometric actuation in which the position of the R/W transducer 6 is controlled with respect to the suspension 5 through a microactuator which is interposed between the R/W transducer 6 and the corresponding support system. The micrometric solution is shown in figure 3, which is an exploded view of the end of the suspension 5, the gimbal 8, the R/W transducer 6 and a microactuator 10, in this case of the rotary type. The microactuator 10 is controlled by a signal supplied by control electronics, on the basis of tracking errors.

The millimetric solution has the disadvantage that it causes considerable consumption, it cannot be obtained by batch production processes, and does not permit high accuracy, and thus does not allow very high density disks to be read. However these problems are solved by the micrometric solution, to which the present invention therefore relates.

In order to manufacture microactuator 10, different solutions have been proposed, based on electrostatic, electromagnetic and piezoelectric principles. Electrostatic microactuators are generally of a rotary type and comprise two basic elements, i.e. a stator secured to the gimbal 8, and a rotor freely movable with respect to the stator and secured to the R/W transducer 6. On the other hand electromagnetic microactuators substantially comprise variable reluctance micromotors comprising windings, the purpose of which is to generate a magnetic field attracting a magnetic core. The proposed electromagnetic microactuators are also of the rotary type, since these have greater resistance to impacts than linear microactuators. Microactuators of the piezoelectric type use the piezoelectricity of specific materials in order to obtain the movement of a mobile part with respect to a fixed part, and are generally of the linear type.

Microactuators are currently made of two materials, i.e. of polysilicon inside a suitably excavated wafer (see for example European patent application no. 97830556.3 filed on 29.10.97 in the name of the same applicant); and of metal, which is generally grown galvanically on a semiconductor material wafer (see for example the article "Magnetic Recording Head Positioning at Very High Track Densities Using a Microactuator-Based, Two-Stage Servo System" by L.S. Fan, H.H. Ottesen, T.C. Reiley, R.W. Wood, IEEE Transactions on Industrial Electronics, vol. 42, No. 3, June 1995).

In both cases, the problem exists that when assembling the read/write head to the microactuator and forming the connections with the control circuitry, displacement of the various components can occur, and/or the suspended structures can stick. In addition, stresses can arise, such as to create conditions of fragility of the structure.

The object of the invention is thus to provide a method for manufacturing a read/write unit including at least the microactuator and the read/write transducer, using conventional microelectronics manufacturing techniques, and as far as possible without offset and residual stresses.

According to the present invention, a method is provided for manufacturing a hard disk read/write unit with micrometric actuation, as defined in claim 1.

For a better understanding of the present invention, a preferred embodiment is now described, purely by way of nonlimiting example, with reference to the attached drawings in which:
- figure 1 shows a top view of an actuator for hard disks, of a known type;
- figure 2 is an enlarged lateral view of some parts of the actuator of figure 1;
- figure 3 is an exploded view of the micrometric actuator unit in an actuator device having a double actuator step;
- figure 4 is a schematic representation of a rotary-type microactuator;
- figures 5-11 show cross-sections through a silicon wafer accommodating a first embodiment of the microactuator of figure 4 in successive production steps;
- figure 12 is a perspective view of a reading head to be bonded to the microactuator;
- figure 13 is a cross-section similar to those of figures 5-11 of the first embodiment, in a successive manufacture step;
- figure 14 is a cross-section of the silicon wafer, slightly displaced compared to figure 13 of the first embodiment, in a successive manufacture step;
- figure 15 is a perspective view of the hard disk read/write unit of hard disks according to the first embodiment, in the final condition assembled to the gimbal;
- figure 16 is a cross-section similar to that of figure 5, of a second embodiment of the microactuator;
- figure 17 shows the structure of figure 16 in a successive manufacture step; and
- figure 18 shows a cross-section of the read/write unit according to the second embodiment, in the final condition assembled to the gimbal.

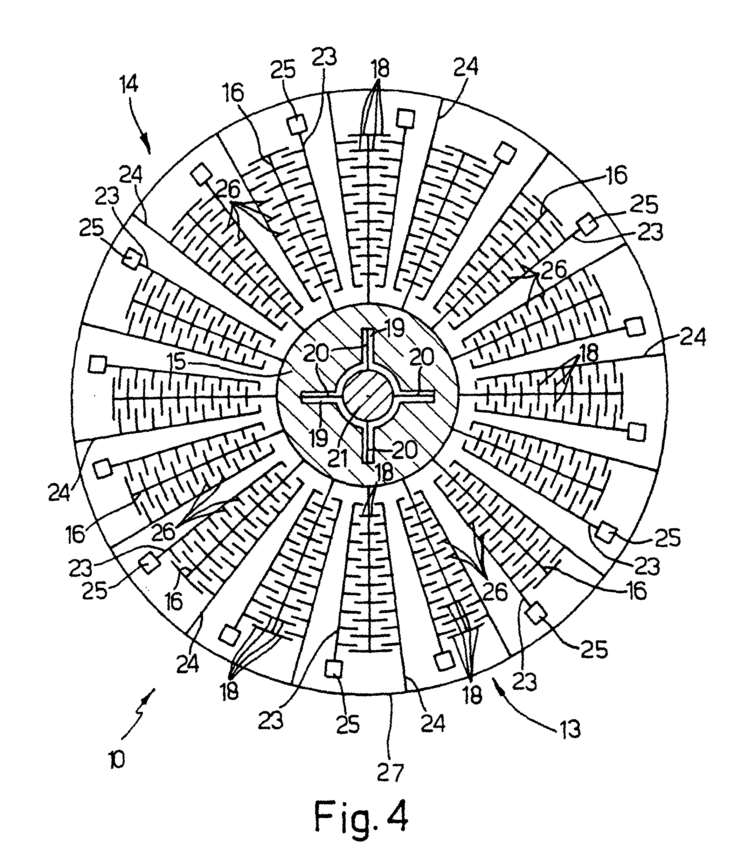

With reference to figure 4, the microactuator 10 comprises an external stator 13, which is designed to be connected, together with other components of the dice which accommodates the microactuator 10, to the plate 8a of gimbal 8 (figure 3), and an internal rotor 14, which is connected capacitively to the stator 13, and is designed to be bonded to R/W transducer 6 (figure 3).

Rotor 14 comprises a suspended mass 15 which has a substantially annular shape and a plurality of movable arms 16 extending radially towards the exterior, starting from suspended mass 15. Each movable arm 16 supports a plurality of elongate extensions, forming movable electrodes 18, which extend on both sides of the movable arms 16, in a direction which is substantially circumferential (i.e. perpendicularly to the respective movable arm 16).

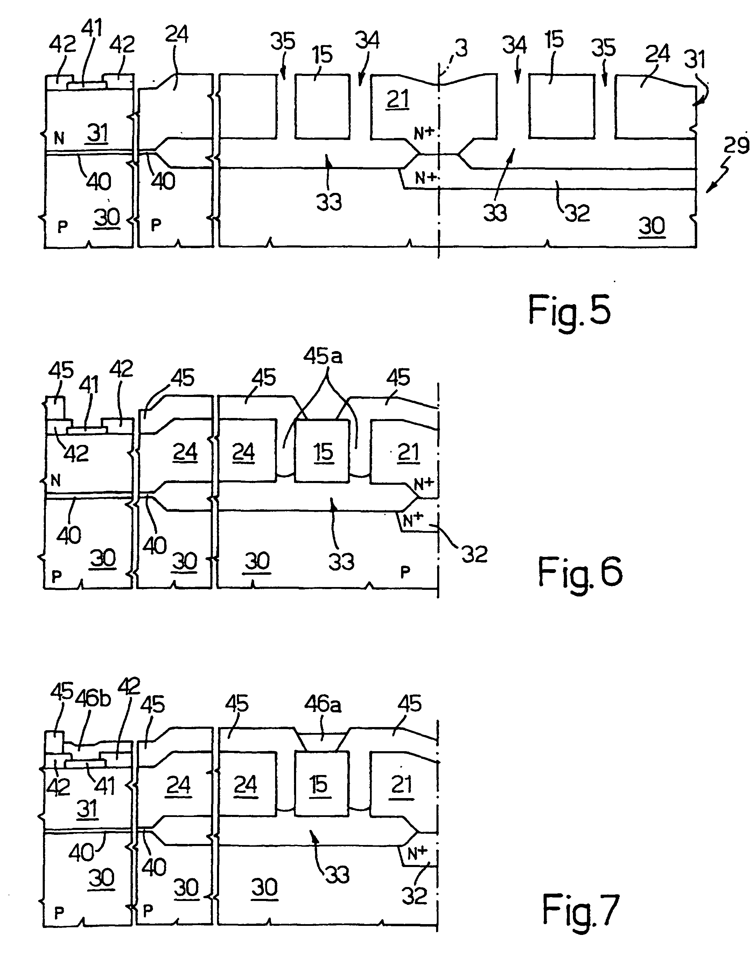

The movable mass 15 has four annular slots 19, extending radially from the inner circumference; four resilient suspension and anchorage elements, called hereinafter as "springs" 20, extend inside the annular slots 19 for resiliently and electrically connecting the suspended mass 15 to a fixed anchorage region 21. Anchorage region 21, which has a circular shape, is disposed concentrically to the movable mass 15 of the rotor, and allows biasing of the movable mass 15 and of the movable electrodes 18 of the rotor 14, through a buried conductive region, as shown in detail in figures 5-12.

Stator 13 comprises a plurality of first fixed arms 23, each extending in a radial direction to the left of each movable arm 16, and a plurality of second fixed arms 24, each extending in a radial direction to the right of each movable arm 16. Each first fixed arm 23 extends from a respective first fixed region 25; fixed regions 25 are arranged circumferentially around rotor 14 and are connected electrically to one another by buried or surface connections, not shown, to bias first fixed arms 23 to a first voltage. Second fixed arms 24 extend from a single second fixed region 27 having an annular shape and externally delimiting the microactuator 10. The first and the second fixed arms 23, 24 each support a plurality of elongate extensions, which extend towards the respective movable arms 16 in a substantially circumferential direction (i.e. perpendicularly to the respective fixed arm 23, 24) and define fixed electrodes 26; in particular fixed electrodes 26 are intercalated or interleaved with movable electrodes 18.

In the microactuator in figure 4, in a known manner, fixed electrodes 26 and movable electrodes 18 which are interleaved with one another form a plurality of capacitors arranged in parallel with one another. When potential differences ΔV₁, ΔV₂ are applied between fixed arms 23 and 24 and movable arm 16, by virtue of the capacitive connection, each movable arm 16 is subjected to a transverse force which tends to move it away from arm 23, 24 with which it has the least potential difference, and to move it closer to the other arm 24, 23 with the greater ΔV, giving rise to rotation of the suspended mass 15 with resilient deformation of the springs 20.

Microactuator 10 of figure 4 can be made of polycrystalline silicon or of metal.

If microactuator 10 is made of polycrystalline silicon by forming trenches in the epitaxial layer, similarly to the process described in the aforementioned European patent application no. 97830556.3 and not shown in detail, the process comprises initial steps in which buried contact regions are formed in a monocrystalline silicon substrate; then sacrificial silicon oxide regions are formed on, and partially inside the substrate, in the area on which the rotor must be formed, and electrical isolation regions are formed selectively on the substrate. Then, using a polycrystalline silicon seed region, an epitaxial layer is grown which is of polycrystalline where the microactuator is to be formed, and is monocrystalline where the circuitry is to be formed.

In a known manner, in and on the epitaxial layer conductive regions are then formed to implement the circuitry, the isolations and the connections thereof; pads then are formed, including pads for connecting the R/W transducer 6; a passivation layer is deposited and removed from the areas of the pads and the microactuator. Trenches are then formed in the polycrystalline silicon area of the epitaxial layer, to define microactuator 10 and to separate rotor 14 from stator 13, as well as the areas with different bias, and finally the sacrificial regions are removed through the trenches, forming air gaps.

Then the structure of figure 5 is obtained, showing a wafer 29 comprising a substrate 30 of P-type, and an epitaxial layer 31, which, in the illustrated area, has N conductivity type and a polycrystalline structure. In figure 5, 32 is a buried region of N-type for biasing the rotor, in direct electrical contact with anchorage region 21; 33 is an air gap with an annular shape extending below the movable mass 15, the fixed and movable arms 23, 24, 16; 34 and 35 are the trenches which separate the movable mass 15 of rotor 14 from the anchorage region 21 and the fixed arms 23, 24 of stator 13; 36 is the symmetry axis of the microactuator 10 which, as stated, has substantially radial symmetry except for in bias region 32. In the cross-section of figure 5 (as well as in the successive cross-sections) two fixed arms 24 are shown which are diametrically opposed to one another, but the movable arms 16 and the fixed arms 23 cannot be seen. In the portion which is furthest to the left an area is visible wherein the head pads are provided; in particular in this portion oxide layer 40, selectively isolating epitaxial layer 31 from substrate 30 (but is not present in the monocrystalline area); a pad 41 and part of the passivation layer 42 are visible.

Starting from the structure of figure 5, the present method comprises immobilising the rotor through organic material; in particular, a sacrificial layer 45 is deposited (comprising resin or a polyimide such as pix), which covers the entire wafer surface and fills the trenches 34, 35 with portions 45a; sacrificial layer 45 is then removed by etching back (for example using oxygen) in the areas where anchorages are to be provided for a support flange of the R/W transducer 6 (as described hereinafter) and on the pads 41. Then the structure of figure 6 is obtained.

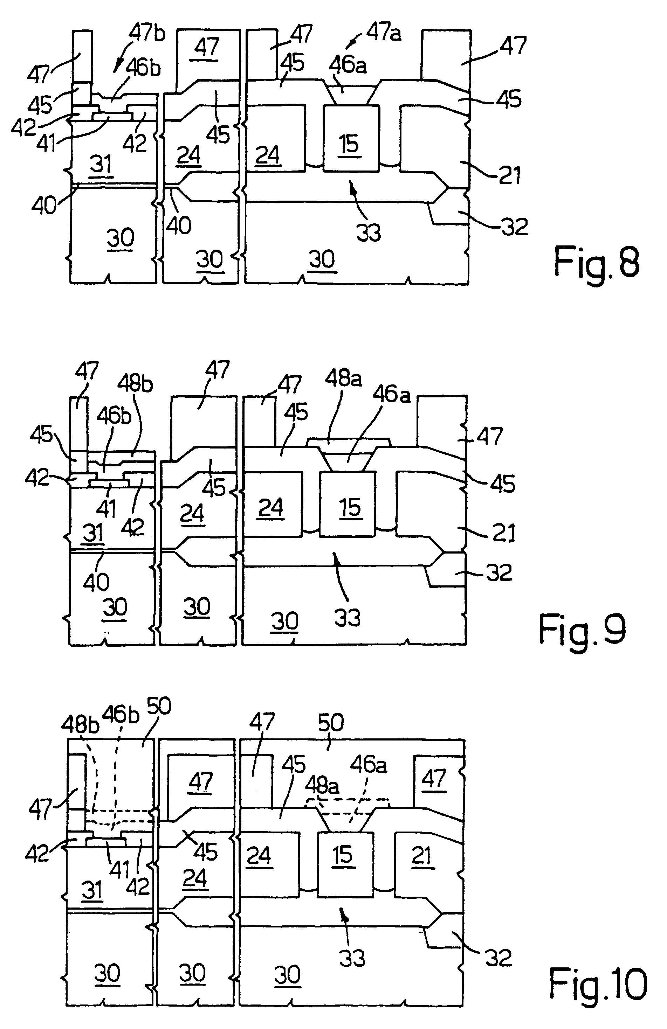

An anchorage metal layer (for example nickel or copper) is then deposited, and by means of a mask not shown, the anchorage metal layer is left only where the anchorages are to be formed. An anchorage region 46a is thus formed on the movable mass 15, and a connection region 46b is formed on the pads 41 (figure 7). In a manner not shown, in this step anchorage regions can also be obtained, to form surface metal electrical connections for the stator 13. Subsequently, a mold mask 47 is deposited, for example of resist or resin defined through a hard mask; in particular mold mask 47 covers all the free surface except for apertures 47a, 47b where support flanges and metal connections for the R/W transducer 6 are to be provided. In addition, in a manner not shown, mold mask 47 can have apertures for connections with the stator 13. The structure of figure 8 is thus obtained.

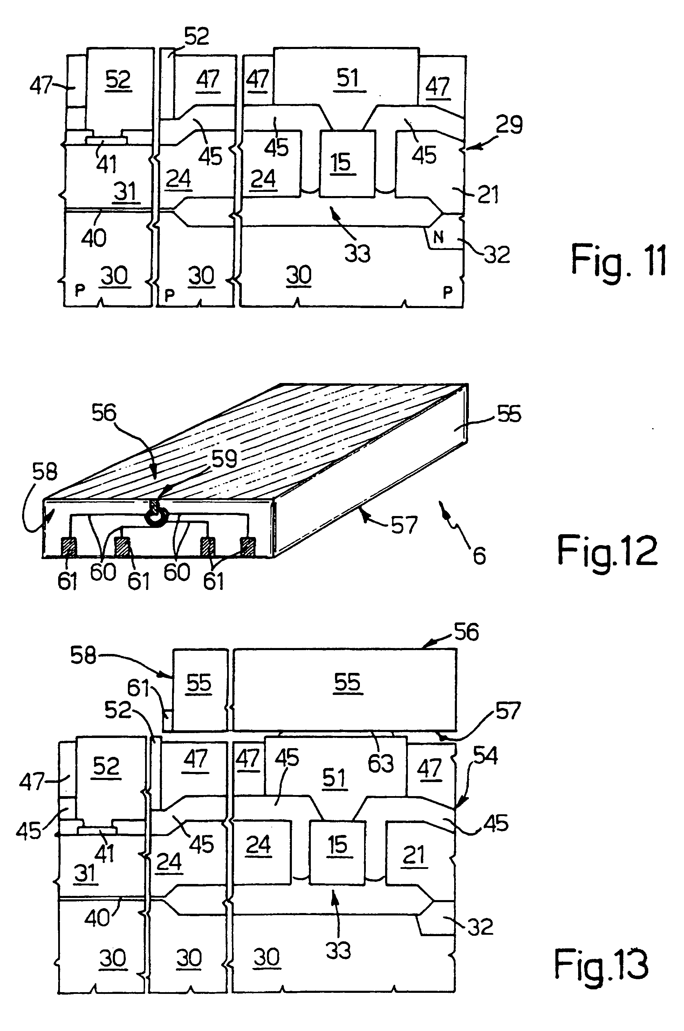

Subsequently electroless nickel or copper is grown, thus, regions 48a and 48b are grown on anchorage regions 46a and connection regions 46b, as shown in figure 9. A metal layer 50 (for example copper) is then deposited, for forming a support flange and electrical connections, covering the entire wafer surface (figure 10). Inside the apertures 47a, 47b of mold mask 47, metal layer 50 is in direct electrical contact with regions 46a, 48a and 46b, 48b, in practice forming a single metal region. Thus in figure 10, the confines of regions 46a, 48a, and 46b, 48b are represented only by broken lines, and regions 46a, 48a and 46b, 48b are no longer represented in the subsequent figures 11, 13 and 14.

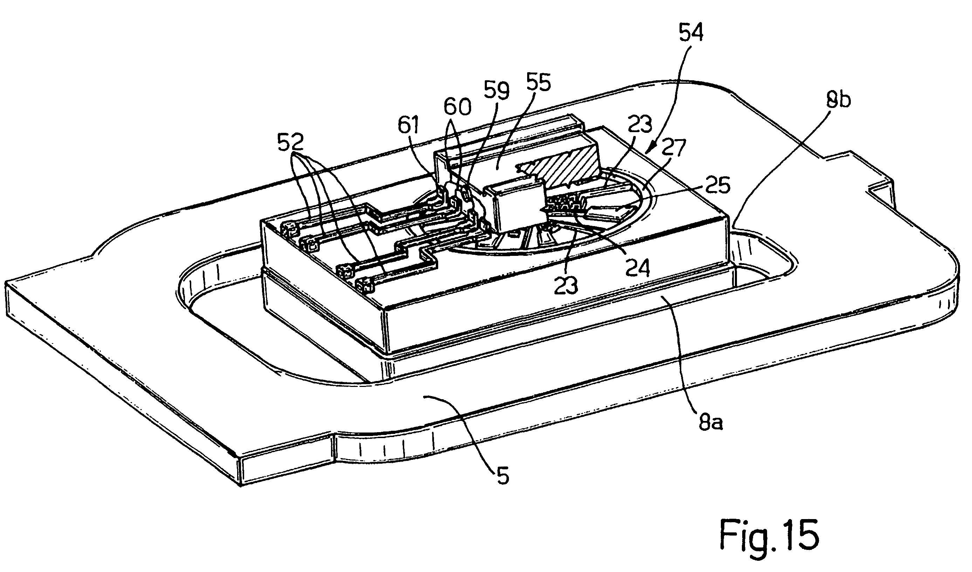

Then metal layer 50 is masked and chemical etched for defining the structure of the flange and of the electrical connections. Consequently, metal layer 50 is removed from everywhere except the regions which define the flange 51, together with regions 46a, 48a, and the electrical connections 52, together with regions 46b, 48b. After removing the mask, the structure of figure 11 is obtained, wherein the flange 51 and part of a connection 52 are visible (for the shape and layout of all the connections 52 see figure 15). Similarly in this step the surface connections (not shown) are formed for the stator 13.

After cutting wafer 29 into individual dices 54, R/W transducer 6 is bonded (figure 13). As shown in figure 12, R/W transducer 6 comprises a support body 55 of ceramic material (for example AlTiC) having a parallelepiped shape, one main surface of which (56 in figure 13, also called "air bearing surface") is intended to face hard disk 7 (figure 2) to be read and/or written, and the other main surface 57 of which must be bonded to rotor 14 of microactuator 10. A (magneto-resistive or inductive) head 59, defining the actual reading and writing device, is bonded to a smaller surface 58 of support body 55, and is connected to the other components of read/write unit 1 by head electrical connections 60 which end at head pads 61. Both head electrical connections 60 and head pads 61 are disposed on the smaller surface 58 which supports head 59.

R/W transducer 6 is attached to the movable mass 15 by bonding, preferably using a polymer material which can be cross-linked through ultraviolet rays ("cured glue"), indicated at 63 in figure 13. Subsequently, head pads 61 are electrically connected to connections 52 by ball bonding, by depositing a small ball 64 of conductive material (for example gold, gold alloys or lead-tin alloys) which puts the connection 52 into contact with the respective head pad 61 (see also figure 15). The assembly comprising the dice 54 (i.e. the microactuator 10 and the associated circuitry, not shown) and the R/W transducer 6 is then glued to plate 8a of the gimbal 8; gluing can be made using a polymer material which can be cross-linked, similarly to the bonding of the R/W transducer 6 to the microactuator 10, or by means of a laser or lead-tin preform, similarly to the techniques currently used to directly secure the R/W transducer 6 to the gimbal 8. The structure of figure 14 is thus obtained.

Finally, mold mask 47 and sacrificial layer 45 are removed, for example by plasma etching ("down stream"), once again releasing rotor 14 and R/W transducer 6, and providing the final structure shown in the perspective view of figure 15, in which part of the R/W transducer 6 is broken to show the underlying actuator 10.

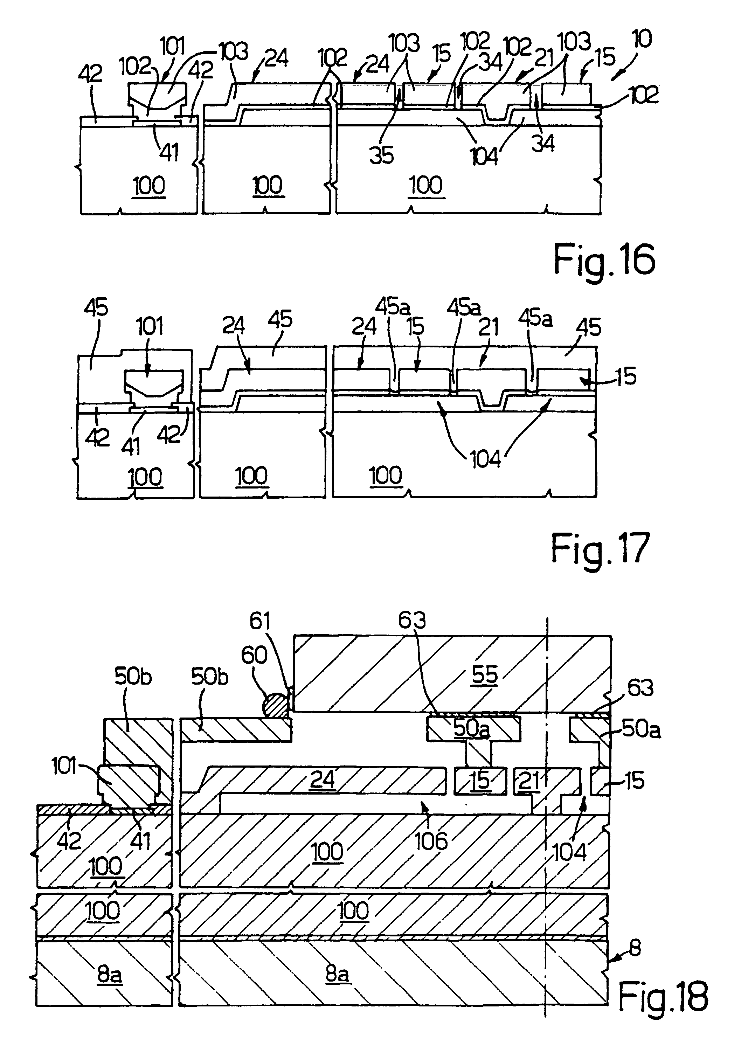

If the actuator is made of metal, it can be formed using galvanic or electroless growing. In the case of galvanic grow, similarly to the process described in the aforementioned article by Fan, ottesen, Reiley and Wood, microactuator 10 is formed on a silicon substrate. To summarise, a first sacrificial layer, preferably of organic polymer material, is formed on the substrate; the first sacrificial layer is removed where an anchorage for the rotor is to be provided; and an auxiliary metal layer known as "seed layer", and necessary for galvanic growth, is deposited. A shaping layer, example of resin, is then deposited, and is removed where metal regions are to be formed (stator and rotor of the microactuator). A metal layer (for example copper) is then galvanically grown on the seed layer, where the latter is not covered by the shaping layer, forming the stator and the rotor. The shaping layer and the uncovered portions of the seed layer are then removed by chemical etching (where the metal layer has not been grown galvanically). Thus the microactuator 10 of figure 16 including substrate 100 is obtained, wherein the anchorage region 21, the movable mass 15 and the fixed arms 16 of the stator (as well as an electrical connection region 101 formed on the pad 41) contain portions of seed layer 102 and portions of galvanically grown metal layer 103; the first sacrificial layer is here indicated at 104.

On microactuator 10 a second sacrificial layer is deposited, corresponding to sacrificial layer 45 and thus identified by the same reference number (figure 17), and the support and electrical connection structure of the R/W transducer 6 is thus formed, exactly as described above for the polysilicon microactuator, with reference to figures 7-15.

After bonding the microactuator to the R/W transducer 6, cutting the dice, and gluing the assembly to the gimbal 8, the sacrificial regions, including in this case mold mask 47, second sacrificial layer 45 and first sacrificial layer 104, are removed, thus providing the final structure shown in figure 18 wherein the air gap obtained by removing the first sacrificial layer is indicated at 106, and the remainder regions and layers which are common to the embodiment shown in figures 5-15 are indicated by the same reference numbers.

The advantages of the described method are as follows. Firstly, it guarantees that the various structures which are formed are retained in the definitive position by a framework formed by sacrificial layer 45 and by mold mask 47. This framework is robust enough to prevent deformations induced by the operations of securing the microactuator 10 to the R/W transducer 6 and by the electrical connection operations (including joining connections 52 to pads 41 and 61, forming the electrical connections between the exterior and the circuitry associated with the microactuator and/or with the head, and formed in the dice 54).

Except for R/W transducer 6 bonding, the manufacture method comprises only steps which are typical of micro-electronics technology, and are thus easy to control, reliable, and low cost.

Finally, it is apparent that many modifications and variations can be made to the manufacture method described and illustrated here, all of which come within the scope of the invention, as defined in the attached claims. In particular, it is emphasised that the method can be applied to any type of microactuator (which operates according to the electrostatic, magnetic or piezoelectric principle, and is of the linear or rotary type), irrespective of the process for forming the microactuator, using polysilicon or metal with galvanic or electroless growth (in which case the seed layer is no longer necessary, but several masks are necessary in order to define the shapes of an activation layer for the electroless chemical reaction, only in the areas where metal should be grown). In addition, instead of in a single step as described, trenches 34, 35 can be excavated in two different steps, with a partial filler interposed, in order to prevent displacements of the rotor with respect to the stator during filling of the trenches by the resin of the sacrificial layer 45. Cutting the dice 54 from the wafer 29 can take place either before or after gluing the R/W transducers 6. Flange 51 and connections 52 may comprise further steps in addition to those described above. In particular, after depositing and defining metal layer 50, the steps described with reference to figures 7-11 can be repeated, such that the following steps are also included: forming further anchorage regions; forming a further mold mask; further electroless growth; depositing a further metal layer; and defining this further metal layer, similarly to the process above described. Only at the end of these further steps the microactuator 10 is glued to R/W transducer 6 and to gimbal 8. In this case therefore, the steps in figures 7-11 cause forming a "leg" of the flange, and the further steps (only described here) allow obtaining a "head" or gluing platform for the flange itself. Finally, when forming the flange 51 and the connections 52 (either according to the process described with reference to figures 7-11, or to the modified process described above), further metal structures can be formed, for example an annular structure which surrounds from the top the area of the dice 54 which accommodates the electrical components, such as to form a type of electrostatic protective screen for the electrical components themselves.

## Claims

1. A method for manufacturing a hard disk read/write unit, with micrometric actuations, comprising the steps of:
- forming an integrated device (29) including a microactuator (10); and
- securing a read/write transducer (6) to said microactuator (10) to be secured to a suspension device (8); **characterised in that** before said step of securing said transducer (6) to said microactuator (10), an immobilisation structure (45, 47) is formed for said microactuator, and **in that** after said step of securing said transducer (6) to said microactuator (10), said immobilisation structure (45, 47) is removed.

2. A method according to claim 1, **characterised in that** said step of securing comprises the steps of:
- forming a securing flange (51) rigid with said microactuator (10), said securing flange being immobilised by said immobilisation structure (45, 47); and
- bonding said transducer (6) to said securing flange (51).

3. A method according to claim 2, **characterised in that** said securing flange (51) is of metal.

4. A method according to claim 2 or 3, **characterised in that** electrical connections (52) are formed between said transducer (6) and said integrated device (10), simultaneously with said securing flange (51).

5. A method according to claim 4, characterised, before said step of securing, by the steps of:
- forming a sacrificial layer (45) of organic material extending above said integrated device (29) and inside trenches (34, 35) in said microactuator (10);
- selectively removing regions of said sacrificial layer (45) above areas of said microactuator (10) to be anchored to said transducer (6) and pads (41) of said integrated device (29) to be electrically connected to said transducer;
- forming a mold mask (47), said mold mask having apertures (47a, 47b) above the selectively removed regions of said sacrificial layer (45); and
- forming said securing flange (51) and said electrical connections (52) in said apertures (47a, 47b) of said mold mask.

6. A method according to claim 5, characterised, before said step of forming a mold mask (47), by the steps of:
- depositing a metal anchorage layer;
- selectively removing said metal anchorage layer thereby forming anchorage regions (46a, 46b), only in said selectively removed regions of said sacrificial layer (45).

7. A method according to claim 6, **characterised in that** said step of forming a securing flange (51) and electrical connections (52) comprises the steps of:
- electrolessly growing metal material portions (48a, 48b) on said anchorage regions (46a, 46b);
- depositing a metal support layer (50); and
- defining said metal support layer (50) thereby forming said securing flange (51) and said electrical connections (52).

8. A method according to claim 6 or 7, **characterised in that** said anchorage regions (46a, 46b), said electrolessly grown metal material portions (48a, 48b) (48a, 48b), said securing flange (51) and said electrical connections (52) are of a metal selected from copper or nickel.

9. A method according to any one of claims 5-8, **characterised in that** said sacrificial layer (45) is of a material selected from resin or pix.

10. A method according to any one of claims 5-9, **characterised in that** said mold mask (45) is of a material selected from resist or resin.

11. A method according to any one of claims 4-10, characterised, after said step of securing the transducer (6), by the step of ball bonding (60) said electrical connections (52) to pads (61) of said transducer (6).

12. A method according to any one of the preceding claims, characterised, after said step of securing the transducer (6), by the steps of:
- securing said read/write unit to said suspension device (8);
- thereafter, removing said immobilisation structure (45, 47).

## Patentansprüche

1. Verfahren zur Herstellung einer Festplatten-Lese/Schreibeinheit mit mikrometrischen Betätigungen, umfassend folgende Schritte:
- Bildung einer integrierten Vorrichtung (29), die einen Mikroaktuator (10) umfasst; und
- Befestigung eines Lese/Schreibwandlers (6) an besagtem Mikroaktuator (10) zur Befestigung an einer Aufhängevorrichtung (8);
**dadurch gekennzeichnet, dass** vor besagtem Schritt der Befestigung von besagtem Wandler (6) an besagtem Mikroaktuator (10) eine Immobilisierungsstruktur (45, 47) für besagten Mikroaktuator gebildet wird und dadurch, dass nach besagtem Schritt der Befestigung von besagtem Wandler (6) an besagtem Mikroaktuator (10) besagte Immobilisierungsstruktur (45, 47) entfernt wird.

2. Verfahren nach Anspruch 1, **dadurch gekennzeichnet, dass** besagter Schritt der Befestigung folgende Schritte umfasst:
- Bildung eines Befestigungsflansches (51), der mit besagtem Mikroaktuator (10) starr verbunden ist, wobei besagter Befestigungsflansch durch besagte Immobilisierungsstruktur (45, 47) immobilisiert wird; und
- Boriden von besagtem Wandler (6) an besagten Befestigungsflansch (51).

3. Verfahren nach Anspruch 2, **dadurch gekennzeichnet, dass** besagter Befestigungsflansch (51) aus Metall ist.

4. Verfahren nach Anspruch 2 oder 3, **dadurch gekennzeichnet, dass** gleichzeitig mit besagtem Befestigungsflansch (51) elektrische Verbindungen (52) zwischen besagtem Wandler (6) und besagter integrierter Vorrichtung (10) gebildet werden.

5. Verfahren nach Anspruch 4, durch folgende Schritte vor besagtem Schritt der Befestigung gekennzeichnet:
- Bildung einer Opferschicht (45) aus organischem Material, die sich über besagte integrierte Vorrichtung (29) und in Ausnehmungen (34, 35) in besagtem Mikroaktuator (10) erstreckt;
- selektive Entfernung von Regionen von besagter Opferschicht (45) über Bereichen von besagtem Mikroaktuator (10) zur Verankerung an besagtem Wandler (6) und Kontaktierungsflächen (41) von besagter integrierter Vorrichtung (29) zur elektrischen Verbindung mit besagtem Wandler;
- Bildung einer Spritzmaske (47), wobei besagte Spritzmaske Öffnungen (47a, 47b) über den selektiv entfernten Regionen von besagter Opferschicht (45) hat; und
- Bildung von besagtem Befestigungsflansch (51) und besagten elektrischen Verbindungen (52) in besagten Öffnungen (47a, 47b) von besagter Spritzmaske.

6. Verfahren nach Anspruch 5, durch folgende Schritte vor besagtem Schritt der Bildung einer Spritzmaske (47) gekennzeichnet:
- Niederschlagung einer Metallverankerungsschicht;
- Selektive Entfernung besagter Metallverankerungsschicht, wobei nur in besagten selektiv entfernten Regionen von besagter Opferschicht (45) Verankerungsregionen (46a, 46b) gebildet werden.

7. Verfahren nach Anspruch 6, **dadurch gekennzeichnet, dass** besagter Schritt der Bildung eines Befestigungsflansches (51) und elektrischer Verbindungen (52) folgende Schritte umfasst:
- nicht-elektrische Züchtung von Teilen aus metallenem Material (48a, 48b) auf besagten Verankerungsregionen (46a, 46b);
- Niederschlagung einer Metalltragschicht (50); und
- Definierung besagter Metalltragschicht (50), wobei besagter Befestigungsflansch (51) und besagte elektrische Verbindungen (52) gebildet werden.

8. Verfahren nach Anspruch 6 oder 7, **dadurch gekennzeichnet, dass** besagte Verankerungsregionen (46a, 46b), besagte nicht-elektrisch gezüchtete Teile aus metallenem Material (48a, 48b) (48a, 48b), besagter Befestigungsflansch (51) und besagte elektrische Verbindungen (52) aus einem Metall sind, das aus Kupfer oder Nickel ausgewählt ist.

9. Verfahren nach einem der Ansprüche 5 - 8, **dadurch gekennzeichnet, dass** besagte Opferschicht (45) aus einem Material ist, das aus Kunstharz oder Holzteer (Pix) ausgewählt ist.

10. Verfahren nach einem der Ansprüche 5 - 9, **dadurch gekennzeichnet, dass** besagte Spritzmaske (45) aus einem Material ist, das aus Fotolack oder Kunstharz ausgewählt ist.

11. Verfahren nach einem der Ansprüche 4 - 10, **gekennzeichnet durch** folgenden Schritt nach besagtem Schritt der Befestigung des Wandlers (6): Kugelbondung (60) besagter elektrischer Verbindungen (52) mit Kontaktierungsflächen (61) von besagtem Wandler (6).

12. Verfahren nach einem der vorhergehenden Ansprüche, **gekennzeichnet durch** folgende Schritte nach besagtem Schritt der Befestigung des Wandlers (6):
- Befestigung von besagter Lese/Schreibeinheit an besagter Aufhängevorrichtung (8);
- danach Entfernung besagter Immobilisierungsstruktur (45, 47)

## Revendications

1. Procédé de fabrication d'une unité de lecture/écriture de disque dur, avec actionnements micrométriques, comprenant les étapes consistant à :
former un dispositif intégré (29) comprenant un microactionneur (10) ; et
fixer un transducteur de lecture/écriture (6) au dit microactionneur (10) à fixer à un dispositif de suspension (8) ;
**caractérisé en ce que**, avant ladite étape de fixation dudit transducteur (6) au dit microactionneur (10), une structure d'immobilisation (45, 47) est formée pour ledit microactionneur ;
et **en ce que** après ladite étape de fixation dudit transducteur (6) au dit microactionneur (10), ladite structure d'immobilisation (45, 47) est enlevée.

2. Procédé selon la revendication 1, **caractérisé en ce que** ladite étape de fixation comprend les étapes consistant à :
former une bride de fixation (51) rigide avec ledit microactionneur (10), ladite bride de fixation étant immobilisée par ladite structure d'immobilisation (45, 47) ; et
lier ledit transducteur (6) à ladite bride de fixation (51).

3. Procédé selon la revendication 2, **caractérisé en ce que** ladite bride de fixation (51) est composée de métal.

4. Procédé selon la revendication 2 ou 3, **caractérisé en ce que** des connexions électriques (52) sont formées entre ledit transducteur (6) et ledit dispositif intégré (10), simultanément avec ladite bride de fixation (51).

5. Procédé selon la revendication 4, caractérisé, avant ladite étape de fixation, par les étapes consistant à :
former une couche sacrificielle (45) de matériau organique s'étendant au-dessus dudit dispositif intégré (29) et à l'intérieur de tranchées (34, 35) dans ledit microactionneur (10) ;
enlever de manière sélective des régions de ladite couche sacrificielle (45) au-dessus de zones dudit microactionneur (10) à ancrer au dit transducteur (6) et à des plots (41) dudit dispositif intégré (29) à connecter électriquement au dit transducteur ;
former un masque de moulage (47), ledit masque de moulage possédant des ouvertures (47a, 47b) au-dessus des régions de la couche sacrificielle (45) enlevées de manière sélective ; et
former ladite bride de fixation (51) et lesdites connexions électriques (52) dans lesdites ouvertures (47a, 47b) dudit masque de moulage.

6. Procédé selon la revendication 5, caractérisé, avant ladite étape de formation du masque de moulage (47), par les étapes consistant à :
déposer une couche d'ancrage métallique ;
enlever de manière sélective ladite couche d'ancrage métallique pour former ainsi des régions d'ancrage (46a, 46b), uniquement dans lesdites régions enlevées de manière sélective de ladite couche sacrificielle (45).

7. Procédé selon la revendication 6, **caractérisé en ce que** ladite étape de formation d'une bride de fixation (51) et de connexions électriques (52) comprend les étapes consistant à :
faire croître de façon autocatalytique des parties de matériau métallique (48a, 48b) sur lesdites régions d'ancrage (46a, 46b) ;
déposer une couche de support métallique (50) ; et
définir ladite couche de support métallique (50) en formant ainsi ladite bride de fixation (51) et lesdites connexions électriques (52).

8. Procédé selon la revendication 6 ou 7, **caractérisé en ce que** lesdites régions d'ancrage (46a, 46b), lesdites parties de matériau métallique ayant crû de façon autocatalytique (48a, 48b), ladite bride de fixation (51) et lesdites connexions électriques (52) sont en un métal sélectionné entre le cuivre et le nickel.

9. Procédé selon l'une quelconque des revendications 5 à 8, **caractérisé en ce que** ladite couche sacrificielle (45) est en un matériau sélectionné entre de la résine ou du pix.

10. Procédé selon l'une quelconque des revendications 5 à 9, **caractérisé en ce que** ledit masque de moulage (45) est en un matériau sélectionné entre une résine photosensible ou une résine.

11. Procédé selon l'une quelconque des revendications 4 à 10, caractérisé, après ladite étape de fixation du transducteur (6), par l'étape de soudure par écrasement de boule (60) desdites connexions électriques (52) aux plots (61) dudit transducteur (6).

12. Procédé selon l'une quelconque des revendications précédentes, caractérisé, après ladite étape de fixation du transducteur (6), par les étapes consistant à :
fixer ladite unité de lecture/écriture au dit dispositif de suspension (8) ;
puis, enlever ladite structure d'immobilisation (45, 47).
